# EUROPÄISCHE PATENTSCHRIFT

(11) **EP 1 520 334 B1**
(45) Veröffentlichungstag und Bekanntmachung des Hinweises auf die Patenterteilung: **19.02.2020**
(21) Anmeldenummer: 03761407.0
(22) Anmeldetag: 30.05.2003
(51) Int. Cl.: H02K 5/14

(54) **ELEKTROMOTOR MIT BÜRSTENHALTER VON MINDESTENS ZWEI KOHLEBÜRSTEN**
ELECTRIC MOTOR WITH A BRUSH HOLDER OF AT LEAST TWO CARBON BRUSHES
MOTEUR ELECTRIQUE COMPRENANT UN PORTE-BALAI A AU MOINS DEUX BALAIS DE CHARBON

(30) Priorität: 26.06.2002 DE 10228493
(43) Veröffentlichungstag der Anmeldung: 06.04.2005
(73) Patentinhaber: ROBERT BOSCH GMBH, 70442 Stuttgart (DE)
(72) Erfinder: HABEL, Winfried, 70771 Leinfelden-Echterdingen (DE); BAUMANN, Otto, 70771 Leinfelden-Echterdingen (DE); FEHRLE, Siegfried, 70771 Leinfelden-Echterdingen (DE); ULLRICH, Andre, 70794 Filderstadt-Bernhausen (DE); WEISS, Michael, 70193 Stuttgart (DE)
(86) Internationale Anmeldenummer: PCT/DE2003/001761
(87) Internationale Veröffentlichungsnummer: WO 2004/004094

(56) Entgegenhaltungen:
- EP-A- 0 706 255
- US-A- 4 293 789
- US-A- 4 311 936
- US-A- 5 019 741

## Beschreibung

### Stand der Technik

Die vorliegende Erfindung betrifft einen Elektromotor mit einer Halterung für mindestens zwei Kohlebürsten, die mittels Federkraft in radialer Richtung auf die Mantelfläche eines zylinderförmigen, auf der Ankerwelle des Motors fixierten Kollektors gedrückt werden.

Mechanische kommutierte Elektromotoren haben üblicher Weise eine derartige Kohlebürsten-Kontaktierung, wie beispielsweise auch in der nicht vorveröffentlichten deutschen Patentanmeldung 101 53 574.0 beschrieben. In dieser Anmeldung, deren Thema die drehbare Lagerung der Halterung für die Kohlebürsten ist, sind keine Maßnahmen offenbart, die einen möglichst einfachen Kohlebürstenwechsel ermöglichen. Die einem Verschleiß ausgesetzten Kohlebürsten eines Elektromotors müssen nach einer gewissen Zahl von Betriebsstunden ausgewechselt werden. Ein solcher Kohlebürstenwechsel ist wegen beengter Platzverhältnisse in der Umgebung des Elektromotors, z.B. in Handwerkzeugmaschinen, oft nicht möglich. Deshalb muss die gesamte Halterung der Kohlebürsten demontiert werden, damit die Kohlebürsten außerhalb des Gerätes ausgewechselt werden können. Der Erfindung liegt deshalb die Aufgabe zugrunde, einen Elektromotor der eingangs genannten Art anzugeben, bei dem die Halterung für die Kohlebürsten möglichst einfach demontiert werden kann.

### Vorteile der Erfindung

Die genannte Aufgabe wird mit den Merkmalen des Anspruchs 1 dadurch gelöst, dass die Halterung mit den Kohlebürsten vom Kollektor in axialer Richtung der Ankerwelle über ein die Ankerwelle haltendes Drehlager hinweg abziehbar ist, und dass Mittel, welche das Drehlager gegen Eindringen von Schmutz abdecken, an ihrer der Halterung mit den Kohlebürsten zugewandten Seite mit einer oder mehreren so verlaufenden Schrägen versehen sind, dass darüber die Kohlebürsten beim Abziehen der Halterung hinweggleiten und dabei gegen die Federkraft radial nach außen geschoben werden.

Die Erfindung ermöglicht trotz Mitteln, welche das Drehlager gegen Eindringen von Schmutz (z.B. Abrieb der Kohlebürsten oder Bohrklein) schützen, eine einfache Demontage der Halterung mit den Kohlebürsten.

Vorteilhafte Weiterbildungen der Erfindung gehen an den Unteransprüchen hervor.

Zum Schutz des Drehlagers gegen Verschmutzung kann zwischen dem Drehlager und dem Kollektor eine Ankerscheibe angeordnet und/oder ein Lagerdom auf das Drehlager aufgesetzt werden. Ein ungehindertes Abziehen der Halterung mit den Kohlebürsten über das Drehlager hinweg wird dadurch ermöglicht, dass die dem Kollektor zugewandte Seite der Ankerscheibe und/oder des Lagerdomes mit einer geradlinigen oder gekrümmt verlaufenden Schräge versehen ist (sind).

### Zeichnung

Anhand zweier in der Zeichnung dargestellter Ausführungsbeispiele wird nachfolgend die Erfindung näher erläutert. Es zeigen:
Figur 1 einen Teil-Längsschnitt durch einen Elektromotor mit einer an seinem Kollektor angeordneten Kohlebürsten-Halterung und Mitteln einer ersten Ausführung zum Schutz des Ankerwellen-Drehlagers gegen Verschmutzung.
Figuren 2a bis 2e verschiedene Stellungen einer Kohlebürste beim Abziehen der Halterung für die Kohlebürsten von der Ankerwelle des Motors und
Figur 3 einen Teil-Längsschnitt durch einen Elektromotor mit einer an seinem Kollektor angeordneten Kohlebürsten-Halterung und Mitteln einer zweiten Ausführung zum Schutz des Ankerwellen-Drehlagers gegen Verschmutzung.

### Beschreibung von Ausführungsbeispielen

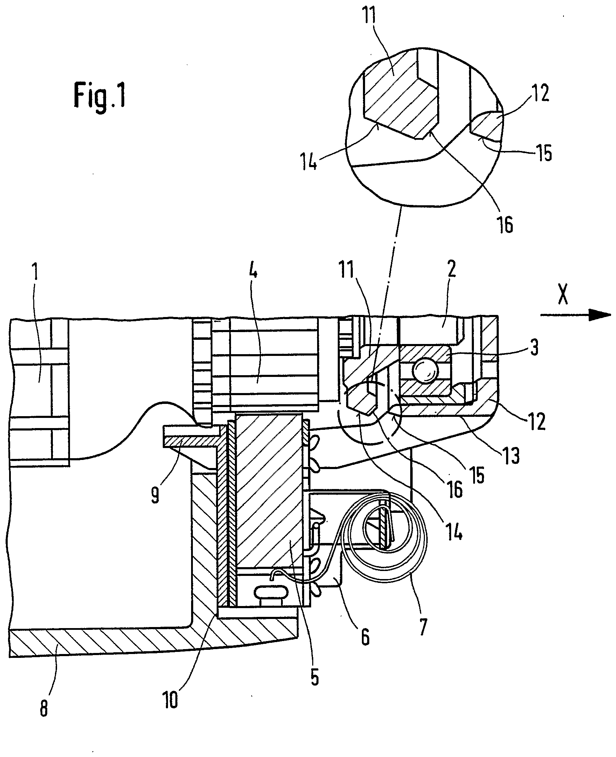

In der Figur 1 ist ein Ausschnitt eines Elektromotors dargestellt, wie er vorzugsweise in handbetriebenen Elektrowerkzeugmaschinen eingesetzt wird. Da der Motor bezüglich seiner Längsachse rotationssymmetrisch aufgebaut ist, ist in der Figur 1 nur eine Hälfte des Elektromotors dargestellt. In bekannter Weise besitzt der Motor einen rotierbaren Anker 1, dessen Ankerwelle 2 an seinem dem Anker 1 entfernten Ende in einem Drehlager 3 gelagert ist. Zwischen dem Anker 1 und dem Drehlager 3 für die Ankerwelle 2 ist auf der Ankerwelle 2 ein zylinderförmiger Kollektor 4 angeordnet, der sich mit der Ankerwelle 2 dreht. Der Kollektor 4 wird von mindestens zwei Kohlebürsten kontaktiert, von denen in der Schnittdarstellung in Figur 1 nur eine Kohlebürste 5 dargestellt ist. Die Kohlebürsten haben die Funktion, dass sie von einem externen Stromanschluss eine elektrische Verbindung zum Kollektor des Motors herstellen. Die Kohlebürsten 5 sind in einer Halterung 6 angeordnet und werden von einer Federkraft in radialer Richtung auf die Mantelfläche des zylinderförmigen Kollektors 4 gedrückt. Die Federkraft wird von einer Feder 7 aufgebracht, die auf der dem Kollektor 4 abgewandten Stirnseite der Kohlebürsten 5 aufliegt und einen Anpressdruck in Richtung auf die Mantelfläche des Kollektors 4 aufbringt. Die Halterung 6 für die Kohlebürsten 5 ist am Gehäuse 8 des Motors lösbar fixiert. Die lösbare Fixierung erfolgt vorzugsweise mittels eines an der Halterung 6 vorhandenen Rastelements 9, das in das Gehäuse 8 einrastbar ist. Am Gehäuse 8 kann ein spezieller Aufnahmeraum 10 angeformt sein, in den die Halterung 6 für die Kohlebürsten 5 einsetzbar ist.

Zwischen dem Kollektor 4 und dem Drehlager 3 ist auf der Ankerwelle 2 eine Ankerscheibe 11 angeordnet. Diese Ankerscheibe 11 dient dazu, das Drehlager 3 für die Ankerwelle 2 gegen das Eindringen von Abrieb der Kohlebürsten 5 und auch von Partikeln (z.B. Bohrstaub, Bohrklein), die beim Arbeitsvorgang einer Elektrowerkzeugmaschine angesaugt werden, zu schützen. Diese Ankerscheibe 11 hat einen größeren Durchmesser als der Kollektor 4 und ragt deshalb in radialer Richtung über den Kollektor 4 hinaus.

In der Regel ist das Drehlager 3 eines Motors von einem Lagerdom 12 abgedeckt. Der Lagerdom 12 ist ein mit dem Gehäuse 8 in Verbindung stehendes kappenartiges Gebilde, welches das Drehlager 3 und die darin gelagerte Ankerwelle 2 an der dem Kollektor 4 abgewandten Stirnseite abdeckt und mit einer vorzugsweise abgeflachten, zylinderförmigen Wandung 13 das Drehlager 3 koaxial umschließt.

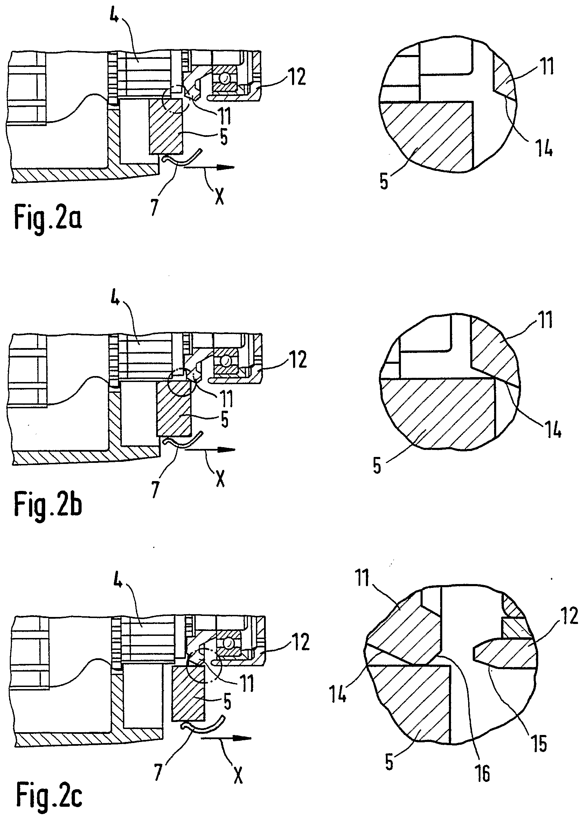

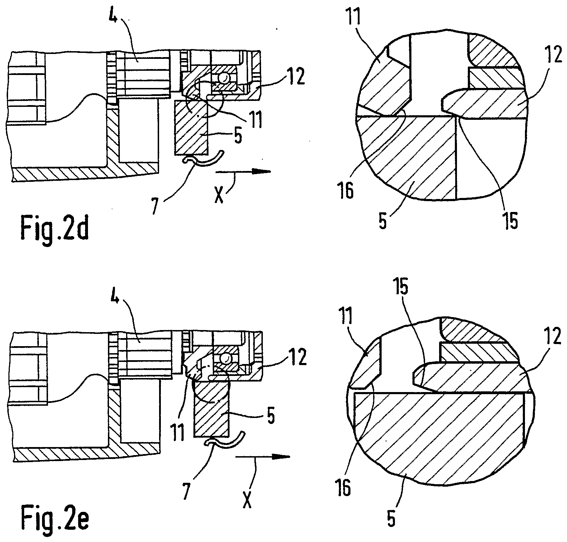

Wie bereits vorangehend beschrieben, ist die Halterung 6 mit den Kohlebürsten 5 am Gehäuse 8 lösbar befestigt. Soll die Halterung 6 für einen Kohlebürstenwechsel vom Motor entfernt werden, wird das Rastelement 9 der Halterung 6 gelöst und die Halterung in axialer Richtung (Pfeilrichtung X) der Ankerwelle 2 vom Kollektor 4 abgezogen. In den Figuren 2a bis 2e sind fünf verschiedene Positionen der Kohlebürsten 5 während des Abziehvorganges der Halterung 6 für die Kohlebürsten 5 dargestellt. Dabei ist der Übersichtlichkeit halber in den Figuren 2a bis 2e jeweils nur eine Kohlebürste 5 mit der sie niederdrückenden Feder 7 ohne die Halterung 6 dargestellt.

Gemäß der Darstellung in Figur 2a wird die Halterung in axialer Richtung bewegt, sodass die Bürsten 5 in Richtung auf die Ankerscheibe 11 zu über den Kollektor 4 hinweggleiten. Schließlich treffen die Kohlebürsten 5 auf die über den Kollektor 4 in radialer Richtung hinausragende Ankerscheibe 11. Diese Situation ist in der Figur 2b dargestellt. Wegen des im Vergleich zum Kollektor 4 größeren Durchmessers der Ankerscheibe 11 würde diese es verhindern, dass die Halterung 6 mit den Kohlebürsten 5 weiter in X-Richtung verschoben und somit ganz vom Motor abgezogen werden kann. Dadurch, dass die Ankerscheibe 11 an ihrer den Kohlebürsten 5 zugewandten Seite mit einer Schräge 14 versehen ist, die vom äußeren Durchmesser der Ankerscheibe 11 zu den Kohlebürsten 5 hin abfällt, gleiten die Kohlebürsten auf dieser Schräge 14 über die Ankerscheibe 11 hinweg, wobei die Kohlebürsten 5 gegen die Kraft der Feder 7 radial nach außen geschoben werden.

Die in den Figuren 2a bis 2e dargestellten vergrößerten Ausschnitte zeigen jeweils die Position der Kohlebürsten 5 relativ zu der Ankerscheibe 11 und zum Lagerdom 12. Die Figur 2c zeigt die Position der Kohlebürsten 5, nachdem sie über die Schräge 14 der Ankerscheibe 11 bis auf den äußersten Punkt der Ankerscheibe 11 hinaufgeschoben worden sind. Nach einer weiteren Vorwärtsbewegung in X-Richtung der Halterung 6 mit den Kohlebürsten 5 gleiten die Kohlebürsten über den obersten Punkt der Ankerscheibe 11 hinweg, bis sie auf den Lagerdom 12 treffen. Diese Situation zeigt die Figur 2d. Der Lagerdom 12, genauer gesagt, die den Kohlebürsten 5 zugewandte Stirnseite der zylinderförmigen Wandung 13 des Lagerdoms 12, ist ebenfalls mit einer Schräge 15 versehen. Diese Schräge des Lagerdoms 12 fällt vom äußersten Durchmesser der zylinderförmigen Wandung 13 in Richtung auf die Kohlebürsten 5 ab. Damit stellt auch ein Lagerdom 12, der einen etwas größeren Durchmesser hat als die Ankerscheibe 11, kein Hindernis für die Fortbewegung der Halterung 6 mit den Kohlebürsten 5 dar. Die Kohlebürsten 5 gleiten nämlich über die Schräge 15 des Lagerdoms hinweg, wobei sie gegen die Kraft der Feder 7 nach außen geschoben werden, bis die Kohlebürsten 5 schließlich auf der Oberfläche der zylinderförmigen Wandung 13 des Lagerdoms 12 aufliegen. Über die Oberfläche der zylinderförmigen Wandung 13 des Lagerdoms 12 kann schließlich die Halterung 6 mit den darin angeordneten Kohlebürsten 5 vollständig abgezogen werden. Die Schrägen 14 und 15 an der Ankerscheibe 11 und am Lagerdom 12 können, wie in den Zeichnungen dargestellt, gradlinig verlaufen, sie können aber auch einen gebogenen Verlauf haben.

Damit auch das Aufschieben der Halterung 6 mit den Kohlebürsten 5 über die Ankerscheibe 11 hinweg bis auf den Kollektor 4 ohne Hindernis erfolgen kann, ist die Ankerscheibe 11 an ihrer dem Lagerdom 12 zugewandten Seite mit einer Schräge 16 versehen, welche es den Kohlebürsten 5 ermöglicht, ohne Hindernis vom Lagerdom 12 aus über die Ankerscheibe 11 hinweg auf den Kollektor 4 geschoben zu werden. Diese Schräge 16 an der Ankerscheibe 11 ist eigentlich nur dann erforderlich, wenn der Außendurchmesser des Lagerdoms 12 kleiner ist als der Außendurchmesser der Ankerscheibe 11. Denn nur für diesen Fall würde die Ankerscheibe 11 beim Aufschieben der Halterung 6 mit den Kohlebürsten 5 in Richtung auf den Kollektor 4 ein Hindernis darstellen.

Abweichend von dem zuvor beschriebenen Ausführungsbeispiel kann zum Schutz des Drehlagers 3 nur eine Ankerscheibe 11 oder nur ein Lagerdom 12 vorgesehen werden. Dann ist auch nur eine Schräge 14 oder 15 an der Ankerscheibe 11 oder an dem Lagerdom 12 erforderlich.

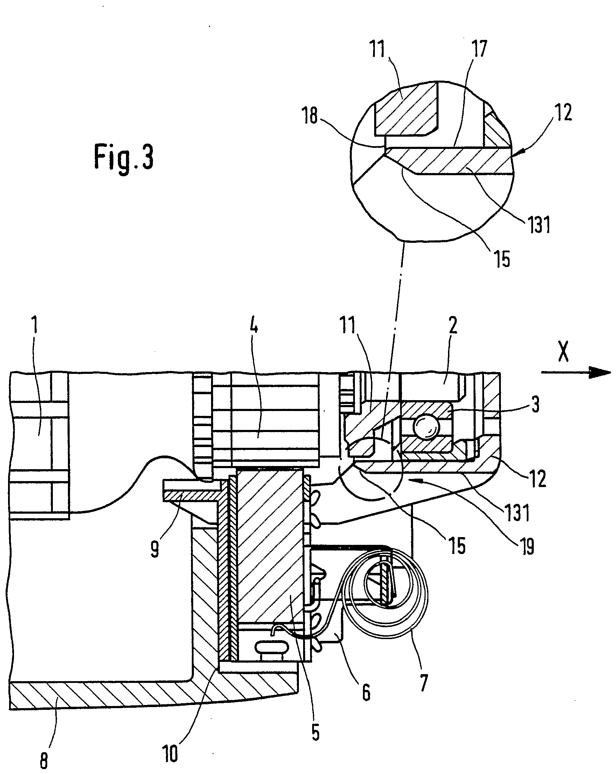

Das in der Figur 3 dargestellte Ausführungsbeispiel unterscheidet sich von dem in den Figuren 1 und 2a bis 2e dargestellten Ausführungsbeispiel allein in der Gestaltung der das Drehlager 3 gegen Schmutz schützenden Mittel. Alle anderen Details des Ausführungsbeispiels in Figur 3 entsprechen denen des Ausführungsbeispiel der Figuren 1 und 2a bis 2e und sind mit denselben Bezugszeichen versehen. Beim Ausführungsbeispiel der Figur 3 ragt der Lagerdom 12 mit seiner zylindrischen Wandung 131 axial in Richtung des Kollektors 4 über die Ankerscheibe 11 hinaus. Deshalb ist nur an der der Halterung 6 mit den Kohlebürsten 5 zugewandten Stirnseite der zylindrischen Wandung 131 des Lagerdoms 12 eine Schräge 15 erforderlich, über die der Halter 6 hinweg gleiten kann.

Die in axialer Richtung verlängerte, über die Ankerscheibe 11 hinausragende Wandung 131 des Lagerdoms 12 hat außerdem den Vorteil, dass der Spalt zwischen ihr und der Ankerscheibe 11 sehr klein gehalten werden kann, was zu einer erhöhten Dichtigkeit des Drehlagers 3 führt. Die Verlängerung der zylindrischen Wandung 131 in Richtung des Kollektors 4 bewirkt, dass Kühlluft direkt zum Kollektor 4 und zu den Kohlebürsten 5 geleitet wird.

## Patentansprüche

1. Elektromotor mit einer Halterung (6) für mindestens zwei Kohlebürsten (5), die mittels Federkraft in radialer Richtung auf die Mantelfläche eines zylinderförmigen, auf der Ankerwelle (2) des Motors fixierten Kollektors (4) gedrückt werden, wobei die Halterung (6) mit den Kohlebürsten (5) vom Kollektor (4) in axialer Richtung der Ankerwelle (2) über ein die Ankerwelle (2) haltendes Drehlager (3) abziehbar ist, **dadurch gekennzeichnet, dass** Mittel (11,12), welche das Drehlager (3) gegen Eindringen von Schmutz abdecken, an ihrer der Halterung (6) mit den Kohlebürsten (5) zugewandten Seite mit einer oder mehreren so verlaufenden Schrägen (14, 15) versehen sind, dass darüber die Kohlebürsten (5) beim Abziehen der Halterung (6) hinweg gleiten und dabei gegen die Federkraft radial nach außen geschoben werden.

2. Elektromotor nach Anspruch 1, **dadurch gekennzeichnet, dass** zwischen dem Kollektor (4) und dem Drehlager (3) eine Ankerscheibe (11) auf der Ankerwelle (2) angeordnet ist und dass das in radialer Richtung über den Kollektor (4) hinausragende Ende der Ankerscheibe (11) mit einer Schräge (14) versehen ist, über welche die Kohlebürsten (5) beim Abziehen der Halterung (6) hinweg gleiten und dabei gegen die Federkraft radial nach außen geschoben werden.

3. Elektromotor nach Anspruch 1, **dadurch gekennzeichnet, dass** das Drehlager (3) von einem Lagerdom (12) abgedeckt ist, der an seiner der Halterung (6) für die Kohlebürsten (5) zugewandten Stirnseite mit einer Schräge (15) versehen ist, über welche die Kohlebürsten (5) beim Abziehen der Halterung (6) hinweg gleiten und dabei gegen die Federkraft radial nach außen geschoben werden.

4. Elektromotor nach Anspruch 1, **dadurch gekennzeichnet, dass** zwischen dem Kollektor (4) und dem Drehlager (3) eine Ankerscheibe (11) auf der Ankerwelle (2) angeordnet ist, dass das Drehlager (3) von einem Lagerdom (12) abgedeckt ist, der über die Ankerscheibe (11) in Richtung des Kollektors (4) hinausragt, und dass der Lagerdom (12) an seiner der Halterung (6) für die Kohlebürsten (5) zugewandten Stirnseite mit einer Schräge (15) versehen ist, über welche die Kohlebürsten (5) beim Abziehen der Halterung (6) hinweg gleiten und dabei gegen die Federkraft radial nach außen geschoben werden.

5. Elektromotor nach einem der Ansprüche 2, 3 oder 4, **dadurch gekennzeichnet, dass** die Schräge (14, 15) geradlinig verläuft.

6. Elektromotor nach einem der Ansprüche 2, 3 oder 4, **dadurch gekennzeichnet, dass** die Schräge (14, 15) einen gebogenen Verlauf hat.

## Claims

1. Electric motor with a holder (6) for at least two carbon brushes (5) which are pressed by means of spring force in the radial direction onto the lateral face of a cylindrical collector (4) which is secured to the armature shaft (2) of the motor, wherein the holder (6) can be pulled off with the carbon brushes (5) from the collector (4) in the axial direction of the armature shaft (2) by means of a rotary bearing (3) which holds the armature shaft (2), **characterized**
**in that** means (11, 12) which cover the rotary bearing (3) to prevent the ingress of dirt are provided, on its side facing the holder (6) with the carbon brushes (5), with one or more slopes (14, 15) which extend in such a way that when the holder (6) is pulled off the carbon brushes (5) slide over said slopes (14, 15) and in the process are pushed radially outwards counter to the spring force.

2. Electric motor according to Claim 1, **characterized in that** an armature disc (11) is arranged on the armature shaft (2), between the collector (4) and the rotary bearing (3), and **in that** the end of the armature disc (11) which projects beyond the collector (4) in the radial direction is provided with a slope (14) over which the carbon brushes (5) slide when the holder (6) is pulled off, and in the process they are pushed radially outwards counter to the spring force.

3. Electric motor according to Claim 1, **characterized in that** the rotary bearing (3) is covered by a bearing spike (12) which is provided, on its end side facing the holder (6) for the carbon brushes (5), with a slope (15) over which the carbon brushes (5) slide when the holder (6) is pulled off, and in the process said carbon brushes (5) are pushed radially outwards counter to the spring force.

4. Electric motor according to Claim 1, **characterized in that** an armature disc (11) is arranged on the armature shaft (2), between the collector (4) and the rotary bearing (3), **in that** the rotary bearing (3) is covered by a bearing stud (12) which projects beyond the armature disc (11) in the direction of the collector (4), and **in that** the bearing stud (12) is provided, on its end side facing the holder (6) for the carbon brushes (5), with a slope (15) over which the carbon brushes (5) slide when the holder (6) is pulled off, and in the process they are pushed radially outward counter to the spring force.

5. Electric motor according to one of Claims 2, 3 or 4, **characterized in that** the slope (14, 15) has a linear extent.

6. Electric motor according to one of Claims 2, 3 or 4, **characterized in that** the slope (14, 15) has a curved extent.

## Revendications

1. Moteur électrique comprenant un élément de maintien (6) pour au moins deux balais de charbon (5), qui sont poussés au moyen d'une force de ressort dans la direction radiale sur l'enveloppe d'un collecteur (4) de forme cylindrique calé sur l'arbre d'induit (2) du moteur, l'élément de maintien (6) muni des balais de charbon (5) pouvant être retiré du collecteur (4) dans la direction axiale de l'arbre d'induit (2) par le biais d'un palier de rotation (3) qui maintient l'arbre d'induit (2),
**caractérisé en ce que**
des moyens (11, 12), qui recouvrent le palier de rotation (3) pour le protéger contre la pénétration de poussière, sont pourvus, au niveau de leur côté qui fait face à l'élément de maintien (6) muni des balais de charbon (5), d'un ou plusieurs biseaux (14, 15) qui suivent un tracé tel que les balais de charbon (5) glissent sur ceux-ci lors du retrait de l'élément de maintien (6) et sont alors poussés vers l'extérieur dans le sens radial contre la force du ressort.

2. Moteur électrique selon la revendication 1, **caractérisé en ce qu'**un disque d'induit (11) est disposé sur l'arbre d'induit (2) entre le collecteur (4) et le palier de rotation (3), et **en ce que** l'extrémité du disque d'induit (11) qui fait saillie au-delà du collecteur (4) dans le sens radial est pourvue d'un biseau (14) sur lequel les balais de charbon (5) glissent lors du retrait de l'élément de maintien (6) et sont alors poussés vers l'extérieur dans le sens radial contre la force du ressort.

3. Moteur électrique selon la revendication 1, **caractérisé en ce que** le palier de rotation (3) est recouvert par une calotte de palier (12) qui, au niveau de son côté frontal qui fait face à l'élément de maintien (6) pour les balais de charbon (5), est pourvue d'un biseau (15) sur lequel les balais de charbon (5) glissent lors du retrait de l'élément de maintien (6) et sont alors poussés vers l'extérieur dans le sens radial contre la force du ressort.

4. Moteur électrique selon la revendication 1, **caractérisé en ce qu'**un disque d'induit (11) est disposé sur l'arbre d'induit (2) entre le collecteur (4) et le palier de rotation (3), **en ce que** le palier de rotation (3) est recouvert par une calotte de palier (12) qui fait saillie au-delà du disque d'induit (11) en direction du collecteur (4), et **en ce que** la calotte de palier (12), au niveau de son côté frontal qui fait face à l'élément de maintien (6) pour les balais de charbon (5), est pourvue d'un biseau (15) sur lequel les balais de charbon (5) glissent lors du retrait de l'élément de maintien (6) et sont alors poussés vers l'extérieur dans le sens radial contre la force du ressort.

5. Moteur électrique selon l'une des revendications 2, 3 et 4, **caractérisé en ce que** le biseau (14, 15) suit un tracé rectiligne.

6. Moteur électrique selon l'une des revendications 2, 3 et 4, **caractérisé en ce que** le biseau (14, 15) présente un tracé courbe.
